# EUROPEAN PATENT SPECIFICATION

(11) **EP 3 067 559 B1**
(45) Date of publication and mention of the grant of the patent: **08.05.2019**
(21) Application number: 16159704.2
(22) Date of filing: 10.03.2016
(51) Int. Cl.: F04B 35/04, F04B 35/06, F04B 39/06, F04B 39/12, F04D 25/08

(54) **INFLATOR**
GASGENERATOR
GONFLEUR

(30) Priority: 11.03.2015 TW 104107791
(43) Date of publication of application: 14.09.2016
(73) Proprietor: Chou, Wen-San, Tainan City (TW)
(72) Inventor: Chou, Wen-San, Tainan City (TW)
(74) Representative: Lang, Christian

(56) References cited:
- WO-A1-2014/121498
- DE-A1- 10 127 920
- US-A1- 2002 009 372

## Description

### (a) Technical Field of the Invention

The present invention relates to an inflator, which comprises a box and a compressor unit installed in the box, wherein the box is designed to allow the air current generated by a cooling fan of the compressor unit to quickly enter the motor's housing to dissipate heat generated therein, so that heat is not easy to accumulate in the motor's housing; therefore, maximum power output of the motor can be achieved, and the performance and service life of the motor can be increased.

### (b) Description of the Prior Art

Air compressors are usually employed to inflate objects such as air cushions or tires. Generally, portable air compressors are manufactured in small size, so that they can be carried easily. Furthermore, a portable air compressor can be powered by a handheld DC power supply or a cigarette lighter socket in a vehicle. Conventionally, a portable air compressor employs a box to accommodate a compressor unit therein, wherein the compressor unit employs a motor to drive a piston body to conduct reciprocating motion in a cylinder to produce compressed air, which can be transferred to an object that needs to be inflated. A portable air compressor is known e.g. from DE-10127920-A1. In operation, heat may be accumulated in the box. Since a motor includes therein a rotor assembly, which contains an armature core formed by an iron core wound with enameled wire, a commutator, and a brush unit, heat is easy to accumulate in the motor's housing. The heat accumulated in the armature core may cause the brush unit to contain more carbon deposits, thus affecting the electrical circuit of the motor. Besides, high temperature resulting from the armature core may reduce the magnetic intensity of the magnets used in the motor. Thus, the performance of the motor can be reduced.

Currently, emergency repair kits, which employ a low-power motor, are used to repair punctured tires. However, in some countries, the Traffic Act stipulates that, when a punctured tire happens to a vehicle on a highway, the driver should repair the punctured tire within a specified period and should immediately drive away after the repair is completed to prevent rearward bump. Under these circumstances, for completing the repair as soon as possible, the motor of the compressor unit of an emergency repair kit should be operated at a higher speed. However, if heat accumulated in the motor's housing cannot be quickly taken away, the performance of the motor will decrease. Even worse, the enameled wire of the armature core will probably be damaged to cause a short circuit, and thus the motor may burn out.

In conventional inflators, a compressor unit and its motor are supported in a box through partitioning walls. However, the box is not structured to assist dissipating heat in the motor. Thus, the box is easy to accumulate the heat generated by the motor, and thus the performance of the motor can be reduced or the motor can be damaged.

### SUMMARY OF THE INVENTION

One object of the present invention is to provide an inflator, which generally comprises a box and a compressor unit installed in the box. The box is composed of a cover and a base. The compressor unit includes a motor, which can be firmly supported in the box by upper and lower airflow-guiding members which are respectively provided at the cover and the base. The motor can rotate a cooling fan for generating an air current, which can be guided by the upper and lower airflow-guiding members to quickly enter the motor's housing via two opposite openings of the motor's housing and then to flow out of the motor's housing via downstream through holes of the motor's housing, thus taking away the heat generated by the rotor assembly in the motor. Thus, heat is not easy to accumulate in the motor, so that the performance and service life of the motor can be increased.

Other objects, advantages, and novel features of the present invention will become more apparent from the following detailed description when taken in conjunction with the accompanying drawings.

### BRIEF DESCRIPTION OF THE DRAWINGS

FIG 1 shows an exploded view of an inflator according to one embodiment of the present invention, wherein the inflator generally includes a box being composed of a cover and a base, and a compressor unit.
FIG 2 shows a 3-dimensionally sectional view of the inflator.
FIG 3 shows a 3-dimensional view of the base of the box.
FIG 4 shows a top view of the inflator, wherein the location of the compressor unit is manifested.
FIG 5 shows a sectional view of the inflator
FIG 6 shows a sectional view of the box.
FIG 7 shows a 3-dimensionally sectional view of the inflator, wherein the air current for dissipating heat is manifested.

### DETAILED DESCRIPTION OF THE PREFERRED EMBODIMENTS

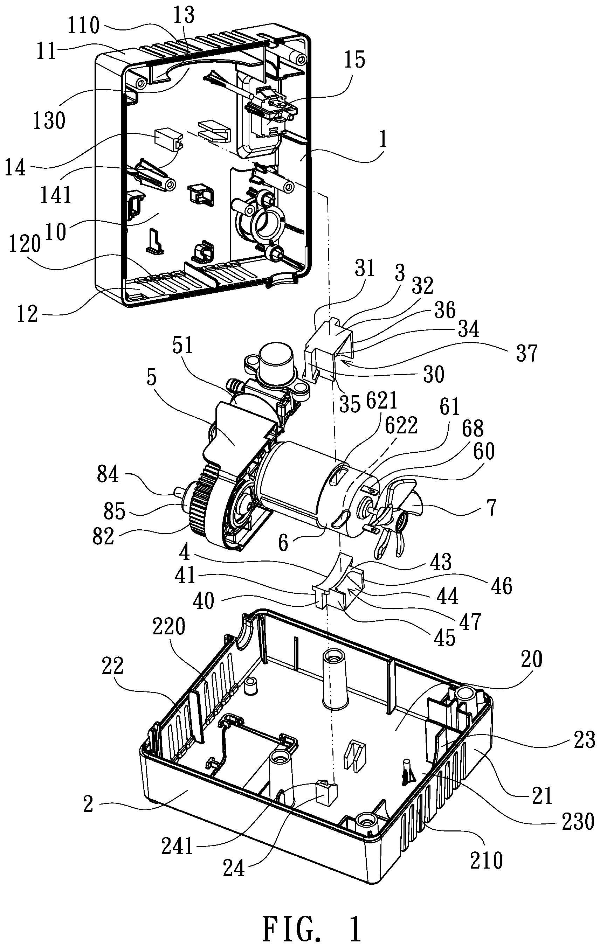

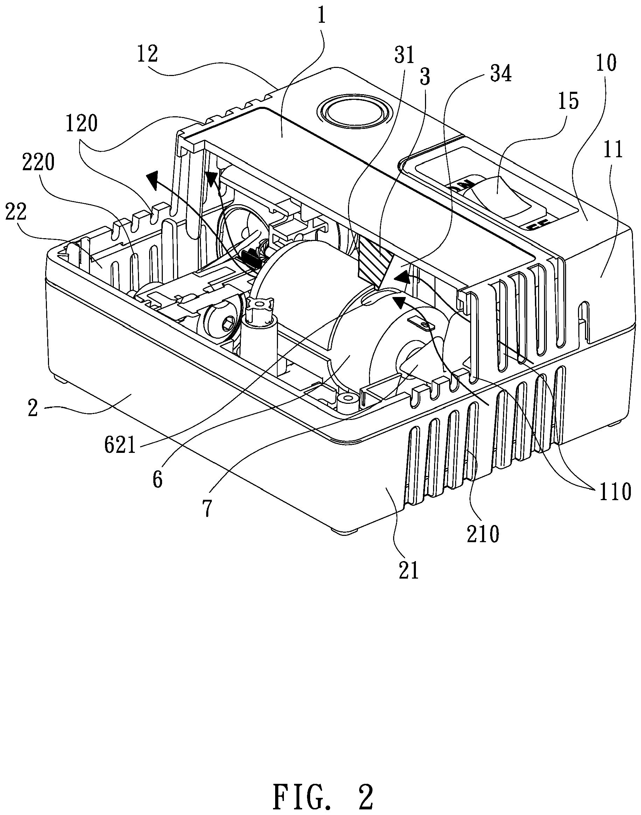

Referring first to FIGS. 1 and 2, an inflator according to one embodiment of the present invention is shown, which generally includes a box and a compressor unit installed in the box, wherein the box is composed of a cover 1 and a base 2.

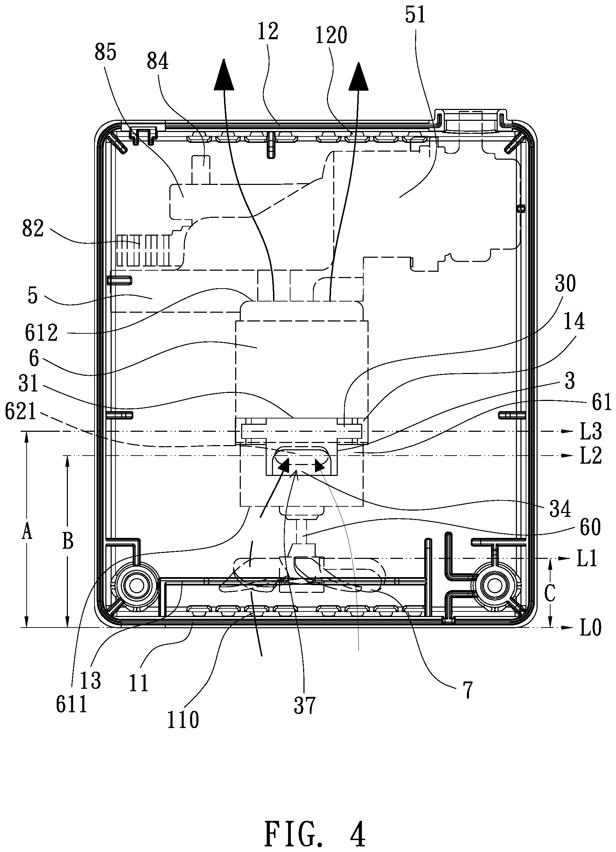

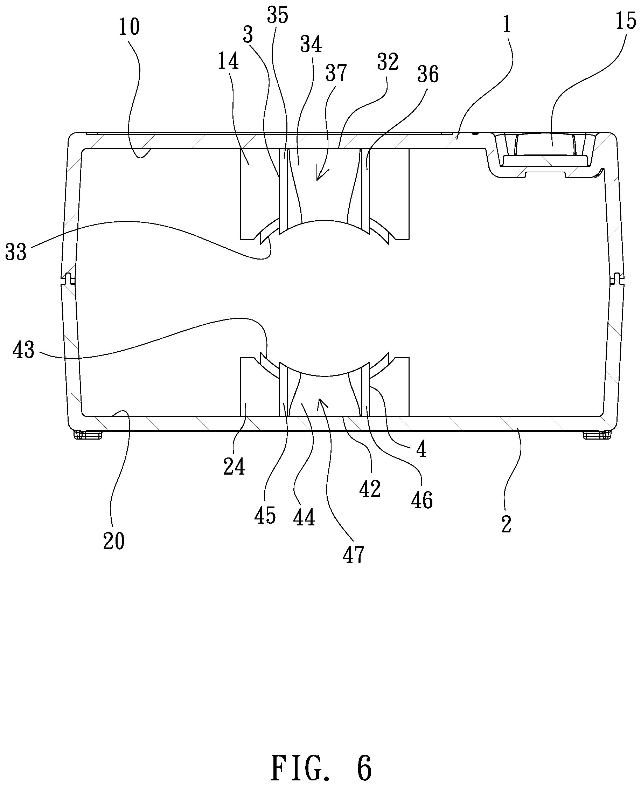

As shown in FIG 1, the cover 1, which has a rectangular board 10, a front wall 11 and a rear wall 12 opposite to the front wall 11, wherein the rectangular board 10 is installed with a switch 15 for starting or stopping the compressor unit. The front wall 11 of the cover 1 defines multiple first slits 110 to serve as an air entrance port, while the rear wall 12 of the cover 1 defines multiple second slits 120 to serve as an air exit port. The rectangular board 10 is provided with two opposite, upper fixing columns 14, each of which defines a channel 141, for engaging with an upper airflow-guiding member 3, which has an intercepting wall 31 of a predetermined height, two lateral walls 35, 36, a base plate 32, and a curved portion 33 (see also FIGS. 4 and 6). The two lateral walls 35, 36 respectively extend from two opposite sides of the intercepting wall 31, towards the front wall 11 of the cover 1. The intercepting wall 31 is farther to the front wall 11 of the cover 1 than its adjacent lateral walls 35, 36. The base plate 32 is formed between one end of the intercepting wall 31 and the lateral walls 35, 36. The curved portion 33, conforming to the curvature of the housing 61 of a motor 6 of the compressor unit, is formed opposite to the base plate 32. The upper airflow-guiding member 3 is formed with two opposite ribs 30, which respectively extend from the two lateral sides 35, 36 and are substantially perpendicular to the two lateral sides 35, 36. The two opposite ribs 30 can engage in the channels 141 of the two upper fixing columns 14 and can support the curved portion 33, so that the upper airflow-guiding member 3 can be fixed onto the cover 1, and the curved portion 33 thereof can be used to support the motor's housing 61 of the compressor unit. The upper airflow-guiding member 3 is engaged with the upper fixing columns 14 such that the base plate 32 thereof is brought in contact with the rectangular board 10 of the cover 1. An upper air guiding channel 37 is defined between the intercepting wall 31, the two lateral walls 35, 36, and the base plate 32 of the upper airflow-guiding member 3. An upper slant surface 34, which is formed between the intercepting wall 31 and the base plate 32, faces towards the front wall 11 of the cover 1 for guiding an air current generated by a cooling fan 7 of the compressor unit to enter the motor's housing 61 more smoothly. Furthermore, the cover 1 is provided with an upper wall 13 which has a concave bottom 130. The upper wall 13 is located behind and parallel to the front wall 11 of the cover 1.

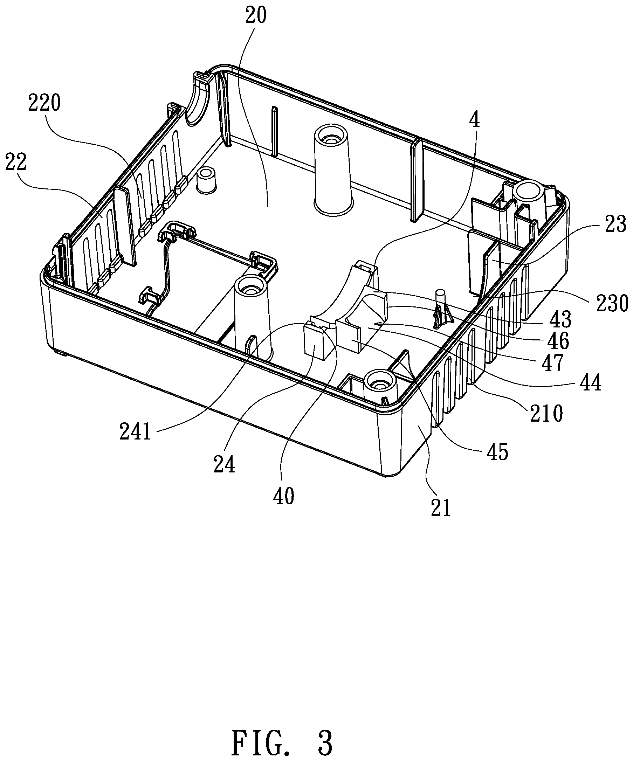

Referring to FIGS. 1 and 3, the base 2 has a rectangular board 20, a front wall 21 and a rear wall 22 opposite to the front wall 21. When the base 2 is combined with the cover 1 to form the box, the front wall 21 of the base 2 is aligned with the front wall 11 of the cover1, while the rear wall 22 of the base 2 is aligned with the rear wall 12 of the cover 1.The front wall 21 of the base 2 defines multiple first slits 210 to serve as an air entrance port, while the rear wall 22 of the base 2 defines multiple second slits 220 to serve as an air exit port. The rectangular board 20 is provided with two opposite, lower fixing columns 24, each of which defines a channel 241, for engaging with a lower airflow-guiding member 4, which is similar to the upper airflow-guiding member 3. The lower airflow-guiding member 4 has an intercepting wall 41 of a predetermined height, two lateral walls 45, 46, a base plate 42, and a curved portion 43 (see also FIG 6). The two lateral walls 45, 46 respectively extend from two opposite sides of the intercepting wall 41, towards the front wall 21 of the base 2. The intercepting wall 41 is farther to the front wall 21 of the base 2 than its adjacent lateral walls 45, 46. The base plate 42 is formed between one end of the intercepting wall 41 and the lateral walls 45, 46. The curved portion 43, conforming to the curvature of the motor's housing 61 of the compressor unit, is formed opposite to the base plate 42. The lower airflow-guiding member 4 is formed with two opposite ribs 40, which respectively extend from the two lateral sides 45, 46 and are substantially perpendicular to the two lateral sides 45, 46. The two opposite ribs 40 can engage in the channels 241 of the two lower fixing columns 24 and support the curved portion 43, so that the lower airflow-guiding member 4 can be fixed onto the base 2, and the curved portion 43 thereof can be used to support the motor's housing 61 of the compressor unit. The lower airflow-guiding member 4 is engaged with the lower fixing columns 24 such that the base plate 42 of the lower airflow-guiding member 4 is brought in contact with the rectangular board 20 of the base 2. A lower air guiding channel 47 is defined between the intercepting wall 41, the two lateral walls 45, 46 of the lower airflow-guiding member 4, and the base plate 42 of the lower airflow-guiding member 4. A lower slant surface 44, which is formed between the intercepting wall 41 and the base plate 42, faces towards the front wall 21 of the base 2 for guiding the air current generated by the cooling fan 7 to enter the motor's housing 61 more smoothly. Furthermore, the base 2 is provided with a lower wall 23 which has a concave top 230. The lower wall 23 is located behind and parallel to the front wall 21 of the base 2.

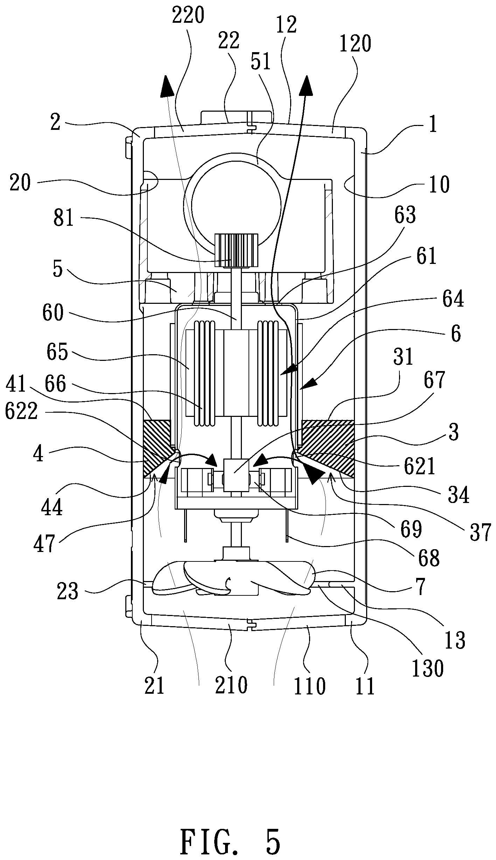

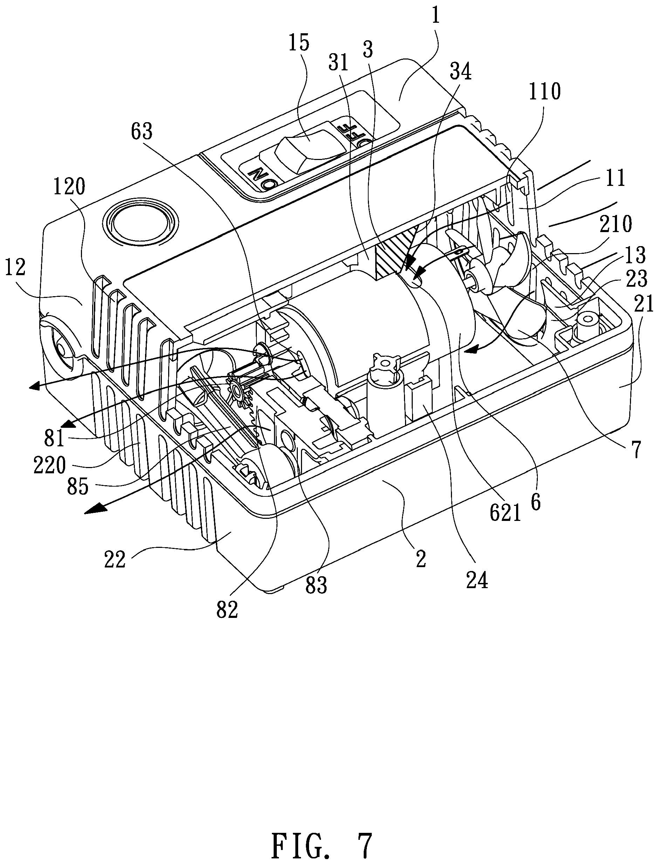

Although the compressor unit is not the main feature of the present invention, the basic elements of the compressor unit will be briefly described below for a better understanding of the technical contents of the present invention. Referring to FIGS. 1 through 5, the compressor unit, which is installed between the cover 1 and the base 2, generally includes a main frame 5, a cylinder 51 fitted with a piston body 85 and provided at the main frame 5, a transmission mechanism, the cooling fan 7, and the motor 6 which can drive the transmission mechanism to have the piston body 85 conduct reciprocating motion in the cylinder 51. The transmission mechanism includes a pinion 81, a gear 82 engaged with the pinion 81, and a counterweight 83 (see FIG 7). In the motor's housing 61, there is provided a rotor assembly 64 (see FIG 5), which includes a rotating shaft 60, an iron core 65 wound with enameled wire 66, a commutator 67, electrical terminals 68, and a brush unit 69. One end of the rotating shaft 60 is fitted with the cooling fan 7, and an opposite end of the rotating shaft 60 is fitted with the pinion 81. The motor's housing 61 defines two opposite openings 621, 622 at its circumferential wall, and a plurality of downstream through holes 63 (see also FIG 5). The counterweight 83 is attached to the gear 82 and provided with a crankshaft and a crankpin 84, wherein the crankshaft is inserted through the gear 82 and rotatably connected to the main frame 5, while the crankpin 84 is pivotally connected to one end of the piston body 85. When the compressor unit is installed between the cover 1 and the base 2, the motor's housing 61 can be located between the upper and lower airflow-guiding members 3, 4 (see also FIGS. 5 and 6), wherein the curved portions 33, 43 of the upper and lower airflow-guiding members 3, 4 can support the motor's housing 61 properly, so that the motor 6 can be prevented from being loose, tilting or tipping over. The motor 6 can be started to rotate the pinion 81, which in turn can rotate the gear 82 to have the piston body 85 conduct reciprocating motion in the cylinder 51.

Referring to FIG 4, the motor 6 is held between the upper and lower airflow-guiding members 3, 4 of the cover 1 and the base 2, wherein the outer surface of the front wall 11 or the front wall 21 is defined as a first reference line (L0). The cooling fan 7 is fitted at one end of the rotating shaft 16, near the front end 611 of the motor's housing 61. The rear end 612 of the motor's housing 61 is distal from the cooling fan 7. The back of the cooling fan 7 is defined as a second reference line (L1). The two opposite opening 621, 622 are located at one portion of the circumferential wall of the housing 61, near the front end 611 of the motor's housing 61. A central axis of the opening 621 or the opening 622, which is parallel to the front walls 11, 21, is defined as a third reference line (L2). A central axis of the two upper fixing columns 14 or the two lower fixing columns 24, which is parallel to the front walls 11, 21, is defined as a fourth reference line (L3). As shown, the distance between the first reference line (L0) and the fourth reference line (L3) is labeled with dimension (A); the distance between the first reference line (L0) and the third reference line (L2) is labeled with dimension (B); the distance between the first reference line (L0) and the second reference line (L1) is labeled with dimension (C); wherein the relationship of (A>B>C) is fulfilled. When the cooling fan 7 is rotated by the motor 6, outside air can be drawn into the box. In this embodiment, the air entrance port, which is formed as the first slits 110, 210, is provided at the front walls 11, 21. Of course, the air entrance port can be provided at other locations of the box as well, provided that it is located in front of the cooling fan 7, and between the first reference line (L0) and the second reference line (L1).

FIGS. 4, 5 and 7 schematically show the air path of the inflator. As shown, when the cooling fan 7 is rotated by the motor 6, outside air can be drawn into the box to form an air current via the first slits 110, 210 of the front walls 11, 21 and the round opening, which is defined by the two concave parts 130, 230 of the upper and lower walls 13, 23. The upper and lower airflow-guiding members 3, 4 are disposed in contact with the motor's housing 61, wherein the two opposite openings 621, 622 are respectively within the upper and lower air guiding channels 37, 47 and respectively in front of the slant surfaces 34, 44 of the airflow-guiding members 3, 4, so that the air current can be guided by the slant surfaces 34, 44 to pass through the openings 621, 622 to enter the motor's housing 61 more easily, and then can flow out of the motor's housing 61 via the downstream through holes 63 thereof, and finally can flow out of the box via the second slits 120, 220 of the rear walls 12, 22. Therefore, the heat generated from the friction between the brush unit 69 and the commutator 67, and the heat generated from the electrical circulation in the enameled wire 66 can be taken away with the air current (see FIG 5).

As a summary, the inflator of the present invention can solve the poor heat dissipation in conventional inflators. The inflator of the present invention is featured in that the cover 1 and the base 2 are respectively provided with the upper and lower airflow-guiding members 3, 4, which can quickly guide the air current generated by the cooling fan 7 to enter the motor's housing 61 via the two opposite openings 621, 622 of the housing 61 and then to flow out of the motor's housing 61 via the downstream through holes 63, thus taking away the heat generated by the rotor assembly 64 in the motor 6. Thus, heat is not easy to accumulate in the motor's housing, so that maximum power output of the motor can be achieved, and the performance and service life of the motor can be increased. In addition, the upper and lower airflow-guiding members 3, 4 can be used to firmly support the motor's housing between the cover 1 and base 2.

## Claims

1. An inflator including a box composed of a cover (1) and a base (2), and a compressor unit installed in the box, wherein the cover (1) has a board (10), a front wall (11) and a rear wall (12) opposite to the front wall (10), and the base (2) has a board (20), a front wall (21) aligned with the front wall (11) of the cover (1), and a rear wall (22) aligned with the rear wall (12) of the cover (1), the front walls (11)(21) of the cover and the base defining multiple first slits (110)(210) to serve as an air entrance port, the rear walls (12)(22) of the cover and the base defining multiple second slits (120)(220) to serve as an air exit port, the compressor unit including a motor (6) having a rotating shaft (60), one end of which is provided with a cooling fan (7), behind the front walls (11)(21), for drawing outside air into the box to form an air current via the first slits (110)(210), the motor (6) defining two opposite openings (621)(622) and at least one downstream through hole (63) on its housing (61); **characterised in that**: the cover (1) is provided at its board (10) with two opposite, upper fixing columns (14) capable of engaging with an upper airflow-guiding member (3), while the base (2) is provided at its board (20) with two opposite, lower fixing columns (24), corresponding to the two upper fixing columns (14), capable of engaging with a lower airflow-guiding member (4), whereby the upper and lower airflow-guiding members (3)(4) firmly supports the motor's housing (61) of the compressor unit, and furthermore, the air current generated by the cooling fan (7) can be guided by the upper and lower airflow-guiding members (3)(4) to quickly enter the motor's housing (61) via the two opposite openings (621)(622) and to flow out of the motor's housing (61) via the downstream through hole (63); wherein the upper airflow-guiding member (3) has an intercepting wall (31), two lateral walls (35, 36) extending from two opposite sides of the intercepting wall (31) thereof towards the front wall (11) of the cover (1), a base plate (32) formed between one end of the intercepting wall (31) and the lateral walls (35, 36), and a curved portion (33) formed opposite to the base plate (32), an upper slant surface (34) being formed between the intercepting wall (31) and the base plate (32) of the upper airflow-guiding member (3) and facing towards the front wall (11) of the cover (1), the upper airflow-guiding member (3) capable of engaging with the upper fixing columns (14) such that the base plate (32) of the upper airflow-guiding member (3) is brought in contact with the board (10) of the cover (1), and an upper air guiding channel (37) is defined between the intercepting wall (31), the two lateral walls (35, 36) of the upper airflow-guiding member (3), and the base plate (32) of the upper airflow-guiding member (3); the lower airflow-guiding member (4) has an intercepting wall (41), two lateral walls (45, 46) extending from two opposite sides of the intercepting wall (41) thereof towards the front wall (21) of the base (2), a base plate (42) formed between one end of the intercepting wall (41) and the lateral walls (45, 46) of the lower airflow-guiding member (4), and a curved portion (43) formed opposite to the base plate (42) thereof, a lower slant surface (44) being formed between the intercepting wall (41) and the base plate (42) of the lower airflow-guiding member (4) and facing towards the front wall (21) of the base (2), the lower airflow-guiding member (4) capable of engaging with the lower fixing columns (24) such that the base plate (42) of the lower airflow-guiding member (4) is brought in contact with the board (20) of the base (2), and a lower air guiding channel (47) is defined between the intercepting wall (41), the two lateral walls (45, 46) of the lower airflow-guiding member (4), and the base plate (42) of the lower airflow-guiding member (4); wherein the two openings (621)(622) of the motor (6) are respectively located within the upper and lower air guiding channels (37)(47), whereby the upper and lower air guiding channels (37)(47) can guide the air current generated by the cooling fan (7) to quickly enter the motor's housing (61) via the two openings (621)(622), wherein the upper and lower slant surfaces (34)(44) of the upper and lower airflow-guiding members (3)(4) allows the air current to pass the two openings (621)(622) more easily; wherein a first reference line (L0) is defined at an outer surface of the front wall (11) of the cover (1) or the front wall (21) of the base (2); a second reference line (L1) is defined at a back of the cooling fan (7) in front of a front end of the motor (6); the two openings (621)(622) defines at a portion of a circumferential wall of the motor's housing (61), near the front end of the motor (6), and a central axis of one of the two openings (621)(622), being parallel to the front wall (11) of the cover (1) or the front wall (21) of the base (2), is defined as a third reference line (L2); a central axis of the two upper fixing columns (14) or the two lower fixing columns (24), being parallel to the front wall (11) of the cover (1) or the front wall (21) of the base (2), is defined as a fourth reference line (L3); the distance between the first reference line (L0) and the fourth reference line (L3) is (A), the distance between the first reference line (L0) and the third reference line (L2) is (B), and the distance between the first reference line (L0) and the second reference line (L1) is (C), wherein the relationship of (A>B>C) is fulfilled; whereby outside air can be drawn into the box via the first slits (110)(210) and then be guided by the upper and lower airflow-guiding members (3)(4) to enter the motor's housing (61) via the two openings (621)(622), and then to flow out of the motor's housing (61) via the downstream through hole (63), and finally to flow out of the box via the second slits (120)(220), thus taking away the heat generated in the motor (6).

2. The inflator of claim 1, wherein each of the two upper fixing columns (14) defines a channel (141), and the upper airflow-guiding member (3) is formed with two opposite ribs (30) capable of engaging in the channels (141) of the two upper fixing columns (14) and supporting the curved portion (33) of the upper airflow-guiding member (3) for allowing the upper airflow-guiding member (3) to be fixed onto the cover (1); each of the two lower fixing columns (24) defines a channel (241), and the lower airflow-guiding member (4) is formed with two opposite ribs (40) capable of engaging in the channels (241) of the two lower fixing columns (24) and supporting the curved portion (43) of the lower airflow-guiding member (4) for allowing the lower airflow-guiding member (4) to be fixed onto the base (2); whereby the motor's housing (61) can be firmly supported by the curved portions (33)(43) of the upper and lower airflow-guiding member (3)(4); wherein the cover (1) is provided with an upper wall (13) which has a concave bottom (130) and is located behind and parallel to the front wall (11) of the cover (1), the base (2) is provided with a lower wall (23) which has a concave top (230) and is located behind and parallel to the front wall (21) of the base (2).

## Patentansprüche

1. Luftpumpenvorrichtung, die ein Gehäuse umfasst, das mit einer Abdeckung (1) und einer Basis (2) und einer Kompressoreinheit gebildet ist, die in dem Gehäuse installiert ist, wobei die Abdeckung (1) eine Platte (10), eine Frontwand (11) und eine Rückwand (12) gegenüber der Frontwand (11) aufweist und wobei die Basis (2) eine Platte (20), eine Frontwand (21), die auf die Frontwand (11) der Abdeckung (1) ausgerichtet ist, und eine Rückwand (22) aufweist, die auf die Rückwand (12) der Abdeckung (1) ausgerichtet ist, wobei die Frontwände (11)(12) der Abdeckung und der Basis mehrere erste Schlitze (110)(210) definieren, um als Lufteintrittsöffnung zu dienen, wobei die Rückwände (12)(22) der Abdeckung und der Basis mehrere zweite Schlitze (120)(220) definieren, um als Luftaustrittsöffnung zu dienen, wobei die Kompressoreinheit einen Motor (6) umfasst, der eine Drehwelle (60) aufweist, deren eines Ende hinter den Frontwänden (11)(21) mit einem Kühlventilator (7) ausgestattet ist, um Umgebungsluft in das Gehäuse zu ziehen, sodass ein Luftstrom durch die ersten Schlitze (110)(210) gebildet wird, wobei der Motor (6) zwei gegenüber liegende Öffnungen (621)(622) und zumindest ein stromabwärts gelegenes Durchlassloch (63) an seinem Gehäuse (61) definiert,
**dadurch gekennzeichnet, dass**
die Abdeckung (1) an ihrer Platte (10) mit zwei gegenüber liegenden, oberen Fixiersäulen (14) ausgestattet ist, die in der Lage sind, in ein oberes, luftstromführandes Element (3) zu greifen, während die Basis (2) an ihrer Platte (20) mit zwei gegenüber liegenden, unteren Fixiersäulen (24) ausgestattet ist, die den oberen zwei Fixiersäulen (14) entsprechen und in der Lage sind, in ein unteres luftstromführendes Element (4) zu greifen, wobei die oberen und unteren luftstromführenden Elemente (3)(4) das Motorgehäuse (61) der Kompressoreinheit stabil stützen und wobei ferner der von dem Kühlventilator (7) erzeugte Luftstrom von den oberen und unteren luftstromführenden Elementen (3)(4) geführt werden kann, um schnell über die zwei gegenüber liegenden Öffnungen (621)(622) in das Motorgehäuse (61) zu gelangen und über das stromabwärts gelegene Durchlassloch (63) aus dem Motorgehäuse (61) herauszufließen, wobei das obere luftstromführende Element (3) eine Auffangwand (31), zwei laterale Wände (35,36), die sich von zwei gegenüber liegenden Seiten der Auffangwand (31) zu der Frontwand (11) der Abdeckung (1) erstrecken, eine Basisplatte (32), die zwischen einem Ende der Auffangwand (31) und den lateralen Wänden (35,36) ausgebildet ist, und einen gebogenen Abschnitt (33) aufweist, der gegenüber der Basisplatte (32) ausgebildet ist, wobei eine obere schräge Fläche (34), die zwischen der Auffangwand (31) und der Basisplatte (32) des oberen luftstromführenden Elements (3) ausgebildet ist und zu der Frontwand (11) der Abdeckung (1) gerichtet ist, wobei das obere luftstromführende Element (3) in der Lage ist, in die oberen Fixiersäulen (14) zu greifen, so dass die Basisplatte (32) des oberen luftstromführenden Elements (3) mit der Platte (10) der Abdeckung (1) in Kontakt gebracht wird, und wobei ein oberer luftführender Kanal (37) zwischen der Auffangwand (31), den zwei lateralen Wänden (35,36) des oberen luftstromführenden Elements (3) und der Basisplatte (32) des oberen luftstromführenden Elements (3) definiert ist, wobei das untere luftstromführenden Element (4) eine Auffangwand (41), zwei laterale Wände (45,46), die sich von zwei gegenüber liegenden Seiten der Auffangwand (41) zu der Frontwand (21) der Basis (2) erstrecken, eine Basisplatte (42), die zwischen einem Ende der Auffangwand (41) und den lateralen Wänden (45,46) des unteren luftstromführenden Elements (4) ausgebildet ist, und einen gebogenen Abschnitt (43) aufweist, der gegenüber der Basisplatte 42) ausgebildet ist, wobei eine untere schräge Fläche (44) zwischen der Auffangwand (41) und der Basisplatte (42) des unteren luftstromführenden Elements (4) ausgebildet ist und zur Frontwand (21) der Basis (2) gerichtet ist, wobei das untere luftstromführende Element (4) in der Lage ist, in die unteren Fixiersäulen (24) zu greifen, so dass die Basisplatte (42) des unteren luftstromführenden Elements (4) mit der Platte (20) der Basis (2) in Kontakt gebracht wird, und wobei ein unterer luftführender Kanal (47) zwischen der Auffangwand (41), den zwei lateralen Wänden (45,46) des unteren luftstromführenden Elements (4) und der Basisplatte (42) des unteren luftstromführenden Elements (4) ausgebildet ist, wobei die zwei Öffnungen (621)(622) des Motors (6) entsprechend in den oberen und unteren Luftführungskanälen (37)(47) angeordnet sind, wobei die oberen und unteren Luftführungskanäle (37)(47) den von dem Kühlventilator (7) erzeugten Luftstrom führen können, so dass er schnell über die zwei Öffnungen (621)(622) in das Motorgehäuse (61) gelangt, wobei die oberen und unteren geneigten Flächen (34)(44) der oberen und unteren luftstromführenden Elemente (3)(4) es dem Luftstrom erlauben, die zwei Öffnungen (621)(622) leichter zu passieren, wobei eine erste Referenzlinie (L0) an einer Außenfläche der Frontwand (11) der Abdeckung (1) oder der Frontwand (21) der Basis (2) definiert ist, wobei eine zweite Referenzlinie (L1) an einer Rückseite des Kühlventilators (7) vor einem vorderen Ende des Motors (6) definiert ist, wobei die zwei Öffnungen (621)(622) einen Bereich einer Umfassungswand des Motorgehäuses (61) nahe dem vorderen Ende des Motors (6) definieren und wobei eine zentrale Achse von einer der zwei Öffnungen (621)(622), die parallel zu der Frontwand (11) der Abdeckung (1) oder der Frontwand (21) der Basis (2) ist, als eine dritte Referenzlinie (L2) definiert ist, wobei eine zentrale Achse der zwei oberen Fixiersäulen (14) oder der zwei unteren Fixiersäulen (24), die parallel zu der Frontwand (11) der Abdeckung (1) oder der Frontwand (21) der Basis (2) ist, als vierte Referenzlinie (L3) definiert ist, wobei die Distanz zwischen der ersten Referenzlinie (L0) und der vierten Referenzlinie (L3) (A) ist, wobei die Distanz zwischen der ersten Referenzlinie (L0) und der dritten Referenzlinie (L2) (B) ist und wobei die Distanz zwischen der ersten Referenzlinie (L0) und der zweiten Referenzlinie (L1) (C) ist, wobei die Beziehung (A>B>C) erfüllt ist, wobei Umgebungsluft über die ersten Schlitze (110)(210) in das Gehäuse gesaugt werden kann und dann durch die oberen und unteren luftstromführenden Elemente (3)(4) geführt werden kann, um über die zwei Öffnungen (621)(622) in das Motorgehäuse (61) zu gelangen und dann über das stromabwärts gelegene Durchlassloch (63) aus dem Motorgehäuse (61) herauszufließen und schließlich über die zweiten Schlitze (120)(220) aus dem Gehäuse herauszufließen, wodurch die in dem Motor (6) erzeugte Wärme abgeleitet wird.

2. Luftpumpenvorrichtung nach Anspruch 1, bei der jede der oberen beiden Fixiersäulen (14) einen Kanal (141) definiert und das obere luftstromführende Element (3) mit zwei gegenüber liegenden Rippen (30) ausgebildet ist, die in der Lage sind, in die Kanäle (141) der zwei oberen Fixiersäulen (14) zu greifen und den gekrümmten Abschnitt (33) des oberen luftstromführenden Elements (3) zu stützen, um es dem oberen luftstromführenden Element (3) zu erlauben, an der Abdeckung (1) fixiert zu werden, wobei jede der zwei unteren Fixiersäulen (24) einen Kanal (241) definiert und das untere luftstromführende Element (4) mit zwei gegenüber liegenden Rippen (40) ausgebildet ist, die in der Lage sind, in die Kanäle (241) der zwei unteren Fixiersäulen (24) zu greifen und den gekrümmten Abschnitt (43) des unteren luftstromführenden Elements (4) zu stützen, um es dem unteren luftstromführenden Element (4) zu erlauben, an der Basis (2) fixiert zu werden, wobei das Motorgehäuse (61) sicher von den gekrümmten Abschnitten (33)(43) des oberen und unteren luftstromführenden Elements (3)(4) gestützt werden kann, wobei die Abdeckung (1) mit einer oberen Wand (13) ausgestattet ist, die einen konkaven Boden (130) aufweist und hinter der und parallel zu der Frontwand (11) der Abdeckung (1) angeordnet ist, wobei die Basis (2) mit einer unteren Wand (23) ausgestattet ist, die eine konkave Oberseite (230) aufweist und hinter der und parallel zu der Frontwand (21) der Basis (2) angeordnet ist.

## Revendications

1. Gonfleur incluant un boîtier composé d'un couvercle (1) et d'une base (2), et une unité de compresseur installée dans le boîtier, dans lequel le couvercle (1) comporte un panneau (10), une paroi avant (11) et une paroi arrière (12) opposée à la paroi avant (10), et la base (2) comporte un panneau (20), une paroi avant (21) alignée avec la paroi avant (11) du couvercle (1), et une paroi arrière (22) alignée avec la paroi arrière (12) du couvercle (1), les parois avant (11) (21) du couvercle et de la base définissant de multiples premières fentes (110) (210) pour servir d'orifices d'entrée d'air, les parois arrière (12) (22) du couvercle et de la base définissant de multiples secondes fentes (120) (220) pour servir d'orifice de sortie d'air, l'unité de compresseur incluant un moteur (6) ayant un arbre tournant (60), dont une extrémité est pourvue d'un ventilateur de refroidissement (7), derrière les parois avant (11) (21), pour aspirer l'air extérieur dans le boîtier afin de former un courant d'air via les premières fentes (110) (210), le moteur (6) définissant deux ouvertures opposées (621) (622) et au moins un trou traversant aval (63) sur son carter (61); **caractérisé en ce que**:
le couvercle (1) est pourvu au niveau de son panneau (10) de deux colonnes de fixation supérieures opposées (14) capables de s'enclencher avec un organe de guidage d'écoulement d'air supérieur (3), tandis que la base (2) est pourvue au niveau de son panneau (20) de deux colonnes de fixation inférieures opposées (24), correspondant aux deux colonnes de fixation supérieures (14), capables de s'enclencher avec un organe de guidage d'écoulement d'air inférieur (4), moyennant quoi les organes de guidage d'écoulement d'air supérieur et inférieur (3) (4) supportent fermement le carter (61) du moteur de l'unité de compresseur, et en outre, le courant d'air généré par le ventilateur de refroidissement (7) peut être guidé par les organes de guidage d'écoulement d'air supérieur et inférieur (3) (4) pour entrer rapidement dans le carter (61) du moteur via les deux ouvertures opposées (621)622) et pour sortir du carter (61) du moteur via les trous traversants aval (63) ; dans lequel l'organe de guidage d'écoulement d'air supérieur (3) comporte une paroi d'interception (31), deux parois latérales (35, 36) partant des deux côtés opposés de la paroi d'interception (31) de celui-ci vers la paroi avant (11) du couvercle (1), une plaque de base (32) formée entre une extrémité de la paroi d'interception (31) et les parois latérales (35, 36), et une portion incurvée (33) formée opposée à la plaque de base (32), une surface inclinée supérieure (34) étant formée entre la paroi d'interception (31) et la plaque de base (32) de l'organe de guide d'écoulement d'air supérieur (3) et étant orientée vers la paroi avant (11) du couvercle (1), l'organe de guidage d'écoulement d'air supérieur (3) étant capable de s'enclencher avec les colonnes de fixation supérieures (14) de sorte que la plaque de base (32) de l'organe de guidage d'écoulement d'air supérieur (3) soit amenée en contact avec le panneau (10) du couvercle (1), et un canal de guidage d'air supérieur (37) est défini entre la paroi d'interception (31), les deux parois latérales (35, 36) de l'organe de guidage d'écoulement d'air supérieur (3), et la plaque de base (32) de l'organe de guidage d'écoulement d'air supérieur (3) ; l'organe de guidage d'écoulement d'air inférieur (4) comporte une paroi d'interception (41), deux parois latérales (45, 46) partant des deux côtés opposés de la paroi d'interception (41) de celui-ci vers la paroi avant (21) de la base (2), une plaque de base (42) formée entre une extrémité de la paroi d'interception (41) et les parois latérales (45, 46) de l'organe de guidage d'écoulement d'air inférieur (4), et une portion incurvée (43) formée opposée à la plaque de base (42) de celui-ci, une surface inclinée inférieure (44) étant formée entre la paroi d'interception (41) et la plaque de assiette (42) de l'organe de guidage d'écoulement d'air inférieur (4) et étant orientée vers la paroi avant (21) de la base (2), l'organe de guidage d'écoulement d'air inférieur (4) étant capable de s'enclencher avec les colonnes de fixation inférieures (24) de sorte que la plaque de base (42) de l'organe de guidage d'écoulement d'air inférieur (4) soit amenée en contact avec le panneau (20) de la base (2), et un canal de guidage d'air inférieur (47) est défini entre la paroi d'interception (41), les deux parois latérales (45, 46) de l'organe de guidage d'écoulement d'air inférieur (4), et la plaque de base (42) de l'organe de guidage d'écoulement d'air inférieur (4); dans lequel les deux ouvertures (621) (622) du moteur (6) sont situées respectivement au sein des canaux de guidage d'air supérieur et inférieur (37) (47), moyennant quoi les canaux de guidage d'air supérieur et inférieur (37) (47) peuvent guider le courant d'air généré par le ventilateur de refroidissement (7) pour qu'il entre rapidement dans le carter (61) du moteur via les deux ouvertures (621) (622), dans lequel la surface supérieure et inférieure (34) (44) des organes de guidage d'écoulement d'air supérieur et inférieur (3) (4) permet au courant d'air de passer les deux ouvertures (621) (622) plus facilement ; dans lequel une première ligne de référence (L0) est définie au niveau d'une surface extérieure de la paroi avant (11) du couvercle (1) ou de la paroi avant (21) de la base (2); une deuxième ligne de référence (L1) est définie à l'arrière du ventilateur de refroidissement (7) devant une extrémité avant du moteur (6); les deux ouvertures (621) (622) définissent une portion d'une paroi circonférentielle du carter (61) du moteur, près de l'extrémité avant du moteur (6), et un axe central de l'une des deux ouvertures (621) (622) étant parallèle à la paroi avant (11) du couvercle (1) ou la paroi avant (21) de la base (2), est défini en tant que troisième ligne de référence (L2) ; un axe central des deux colonnes de fixation supérieures (14) ou des deux colonnes de fixation inférieures (24), étant parallèle à la paroi avant (11) du couvercle (1) ou la paroi avant (21) de la base (2), est défini en tant que quatrième ligne de référence (L3) ; la distance entre la première ligne de référence (L0) et la quatrième ligne de référence (L3) est (A), la distance entre la première ligne de référence (L0) et la troisième ligne de référence (L2) est (B), et la distance entre la première ligne de référence (L0) et la deuxième ligne de référence (L1) est (C), dans lequel la relation (A > B > C) est satisfaite; moyennant quoi l'air extérieur peut être aspiré dans le boîtier via les premières fentes (110) (210) puis être guidé par les organes de guidage d'écoulement d'air supérieur et inférieur (3) (4) pour entrer dans le carter (61) du moteur via les deux ouvertures (621, 622), puis sortir du carter (61) du moteur via le trou traversant aval (63), et enfin sortir du boîtier via les secondes fentes (120) (220), enlevant ainsi la chaleur générée dans le moteur (6).

2. Gonfleur selon la revendication 1, dans lequel chacune des deux colonnes de fixation supérieures (14) définit un canal (141), et l'organe de guidage d'écoulement d'air supérieur (3) est formé avec deux nervures (30) opposées capables de s'enclencher dans les canaux (141) des deux colonnes de fixation supérieures (14) et supportant la portion incurvée (33) de l'organe de guidage d'écoulement d'air supérieur (3) pour permettre de fixer l'organe de guidage d'écoulement d'air supérieur (3) sur le couvercle (1); chacune des deux colonnes de fixation inférieures (24) définit un canal (241), et l'organe de guidage d'écoulement d'air inférieur (4) est formé avec deux nervures (40) opposées capables de s'enclencher dans les canaux (241) des deux colonnes de fixation inférieures (24) et supportant la portion incurvée (43) de l'organe de guidage d'écoulement d'air inférieur (4) pour permettre de fixer l'organe de guidage d'écoulement d'air inférieur (4) sur la base (2) ; moyennant quoi le carter (61) du moteur peut être supporté fermement par les portions incurvées (33) (43) de l'organe de guidage d'écoulement d'air supérieur et inférieur (3) (4); dans lequel le couvercle (1) est pourvu d'une paroi supérieure (13) qui comporte un fond concave (130) et est située derrière et parallèle à la paroi avant (11) du couvercle (1), la base (2) est pourvue d'une paroi inférieure (23) qui comporte un haut concave (230) et est située derrière et parallèle à la paroi avant (21) de la base (2).
